# EUROPÄISCHE PATENTSCHRIFT

(11) **EP 1 529 186 B1**
(45) Veröffentlichungstag und Bekanntmachung des Hinweises auf die Patenterteilung: **26.08.2015**
(21) Anmeldenummer: 03784041.0
(22) Anmeldetag: 22.07.2003
(51) Int. Cl.: A01N 59/16, F25D 23/12

(54) **KÄLTEGERÄT MIT WASSERFÜHRENDEN EINBAUTEN**
REFRIGERATING APPLIANCE COMPRISING WATER-BEARING FITTINGS
APPAREIL FRIGORIFIQUE COMPRENANT DES PIÈCES ENCASTRÉES CONDUCTRICES D'EAU

(30) Priorität: 05.08.2002 DE 20212003 U
(43) Veröffentlichungstag der Anmeldung: 11.05.2005
(73) Patentinhaber: BSH Hausgeräte GmbH, 81739 München (DE)
(72) Erfinder: ATHANASIOU, Athanasios, 89355 Giengen (DE)
(86) Internationale Anmeldenummer: PCT/EP2003/008009
(87) Internationale Veröffentlichungsnummer: WO 2004/015337

(56) Entgegenhaltungen:
- CA-A- 2 324 198
- PATENT ABSTRACTS OF JAPAN vol. 0186, no. 33 (M-1714), 2. Dezember 1994 (1994-12-02) -& JP 06 241630 A (SANYO ELECTRIC CO LTD), 2. September 1994 (1994-09-02)
- PATENT ABSTRACTS OF JAPAN vol. 2000, no. 10, 17. November 2000 (2000-11-17) -& JP 2000 205591 A (ZEXEL CORP), 25. Juli 2000 (2000-07-25)
- PATENT ABSTRACTS OF JAPAN vol. 0181, no. 96 (M-1589), 6. April 1994 (1994-04-06) -& JP 06 003017 A (HITACHI LTD; OTHERS: 01), 11. Januar 1994 (1994-01-11)
- PATENT ABSTRACTS OF JAPAN vol. 0141, no. 44 (M-0951), 19. März 1990 (1990-03-19) -& JP 02 010076 A (MATSUSHITA REFRIG CO LTD), 12. Januar 1990 (1990-01-12)
- PATENT ABSTRACTS OF JAPAN vol. 1997, no. 10, 31. Oktober 1997 (1997-10-31) -& JP 09 155369 A (SHARP CORP), 17. Juni 1997 (1997-06-17)
- PATENT ABSTRACTS OF JAPAN vol. 1998, no. 01, 30. Januar 1998 (1998-01-30) -& JP 09 225457 A (SHARP CORP), 2. September 1997 (1997-09-02)
- PATENT ABSTRACTS OF JAPAN vol. 0161, no. 95 (M-1246), 12. Mai 1992 (1992-05-12) -& JP 04 028987 A (MATSUSHITA REFRIG CO LTD), 31. Januar 1992 (1992-01-31)
- PATENT ABSTRACTS OF JAPAN vol. 0165, no. 29 (M-1332), 29. Oktober 1992 (1992-10-29) -& JP 04 194577 A (SHARP CORP), 14. Juli 1992 (1992-07-14)
- PATENT ABSTRACTS OF JAPAN vol. 1996, no. 01, 31. Januar 1996 (1996-01-31) -& JP 07 248170 A (HITACHI LTD), 26. September 1995 (1995-09-26)
- PATENT ABSTRACTS OF JAPAN vol. 1997, no. 11, 28. November 1997 (1997-11-28) -& JP 09 189478 A (HITACHI LTD), 22. Juli 1997 (1997-07-22)

## Beschreibung

Die vorliegende Erfindung betrifft ein Kältegerät mit wasserführenden Einbauten wie etwa einem Spender für gekühltes Trinkwasser oder einem Einwürfelbereiter.

Derartige Einbauten sind häufig unmittelbar an das Leitungswassernetz angeschlossen, so dass ein Benutzer jederzeit, ohne hierfür einen Vorratsbehälter im Kühlschrank nachfüllen zu müssen, gekühltes Trinkwasser zapfen oder Eiswürfel entnehmen kann.

Diese Einbauten verfügen über einen Vorratsbehälter für Wasser oder Eis, der schwierig keimfrei zu halten ist. Auch in den Versorgungsleitungen des Kältegeräts, die einen solchen Vorratsbehälter mit dem Leitungswassernetz verbinden, können sich Keime ansiedeln. Bei langer Verweildauer des Wassers oder Eises können Keimzahlen erreicht werden, die den Geschmack des Wassers bzw. Eises beeinträchtigen.

Um dieses Problem zu beheben, ist ein Eisbereiter vorgeschlagen worden, der nach einer vorgegebenen Lagerdauer des fertigen Eises dieses auftaut, das Tauwasser abfließen lässt und neues E is herstellt. Eine solche Vorgehensweise ist aufwendig, da sie einen Anschluss des Kältegeräts nicht nur an das Trinkwassernetz, sondern auch an das Abwassernetz erfordert, und da das Auftauen und Neuherstellen des Eises große Mengen Energie erfordert.

Ein Kältegerät gemäß dem Oberbegriff des Anspruchs 1 ist z.B. aus der JP-A-09 225457 oder der JP-A-09 155369 bekannt. Aufgabe der vorliegenden Erfindung ist, ein Kältegerät mit wasserführenden Einbauten anzugeben, bei dem auch längere Verweildauern des Wassers in den Einbauten ohne geschmackliche oder sonstige qualitative Beeinträchtigungen des Wassers möglich sind.

Die Aufgabe wird gelöst durch ein Kältegerät mit den Merkmalen des Anspruchs 1.

Die Ausrüstung des Einbauteils verhindert eine übermäßige Vermehrung von Keimen wie etwa Bakterien, Schimmel oder sonstigen Pilzen und damit einen Qualitätsverlust des Wassers. Dabei ist nicht erforderlich, dass sämtliche mit dem Wasser in Kontakt kommenden Oberflächen über eine derartige Ausrüstung verfügen, da ein erfindungsgemäß ausgerüstetes Einbauteil durch Zirkulation bzw. Konvektion des Wassers Fernwirkung entfaltet.

Die Ausrüstung verhindert oder verzögert zumindest die Entwicklung von Bakterien, Schimmelpilzen, etc., und gewährleistet so einen besseren Geschmack des Wassers bzw. ermöglicht längere Verweildauern des Wassers.

Das mit der gegen Mikroben und/oder Pilze wirksamen Ausrüstung versehene Einbauteil kann insbesondere ein Vorratstank eines Trinkwasserspenders oder eine Versorgungsleitung sein, die diesen mit dem Trinkwassernetz verbindet; es kann sich auch um einen Behälter eines Eisbereiters, in dem Eisstücke erzeugt und/oder gelagert werden, oder eine Versorgungsleitung des Eisbereiters handeln.

Um die Kosten für die Ausrüstung gering zu halten, ist lediglich eine mit dem Wasser in Kontakt kommende Oberflächenschicht des Einbauteils mit einer gegen Mikroben und/oder Pilze wirksamen Substanz beaufschlagt.

Eine solche Oberflächenschicht ist besonders zweckmäßig bei Einbauteilen, die tiefgezogen oder extrudiert sind.

Nicht erfindungsgemäß kann alternativ ein Einbauteil auch einteilig aus einem Werkstoff hergestellt sein, der mit einer gegen Mikroben und/oder Pilze wirksamen chemischen Substanz beaufschlagt ist. Dies ist insbesondere zweckmäßig bei Spritzgußteilen.

Die wirksame Substanz ist in beiden Fällen in eine Kunststoffmatrix eingebettet. Als gegen Mikroben wirksame Substanzen kommen vorzugsweise Silberverbindungen und/oder Zeolithe zum Einsatz, in denen gegen Mikroben und/oder Pilze wirksame Metallionen wie z.B. Silber, Zink, Kupfer austauschbar gebunden sind. Derartige Zeolithe sind in EP-0 270 129 B1 beschrieben, mit ihnen beaufschlagte Kunstharzzusammensetzungen in EP-0 228 063 B1.

## Patentansprüche

1. Kältegerät mit wenigstens einem wasserführenden Einbauteil, das eine mit einer gegen Mikroben und/oder Pilze wirksamen chemischen Substanz beaufschlagte Oberflächenschicht und eine von der chemischen Substanz im Wesentlichen freie Trägerschicht aufweist, **dadurch gekennzeichnet, dass** die chemische Substanz eine Silberverbindung enthält und in eine Kunststoffmatrix eingebettet ist.

2. Kältegerät nach Anspruch 1, **dadurch gekennzeichnet, dass** das Einbauteil Teil eines Trinkwasserspenders oder einer Versorgungsleitung des Trinkwasserspenders ist.

3. Kältegerät nach Anspruch 1, **dadurch gekennzeichnet, dass** das Einbauteil Teil eines Eisbereiters oder einer Versorgungsleitung des Eisbereiters ist.

4. Kältegerät nach einem der Ansprüche 1 bis 3, **dadurch gekennzeichnet, dass** das Einbauteil tiefgezogen oder extrudiert ist.

5. Kältegerät nach einem der Ansprüche 1 bis 4, **dadurch gekennzeichnet, dass** die chemische Substanz ein Zeolithmaterial enthält, in dem gegen Mikroben und/oder Pilze wirksame Metallionen austauschbar gebunden sind.

## Claims

1. Refrigerator having at least one water-conducting built-in part, which has a surface layer to which a chemical substance effective against microbes and/or fungi has been applied and a carrier layer essentially free from said chemical substance, **characterised in that** the chemical substance contains a silver compound and is embedded into a plastic matrix.

2. Refrigerator according to claim 1, **characterised in that** the insertion part is part of a drinking water dispenser or of a supply line of the drinking water dispenser.

3. Refrigerator according to claim 1, **characterised in that** the insertion part is part of an ice maker or of a supply line of the ice maker.

4. Refrigerator according to one of claims 1 to 3, **characterised in that** the insertion part is deep-drawn or extruded.

5. Refrigerator according to one of claims 1 to 4, **characterised in that** the chemical substance contains a zeolite material, in which metal ions effective against microbes and/or fungi are bound so as to be exchangeable.

## Revendications

1. Appareil frigorifique comprenant au moins une pièce incorporée conduisant l'eau qui présente une couche de surface pourvue d'une substance chimique antimicrobienne et/ou antifongique et une couche de support essentiellement exempte de ladite substance chimique, **caractérisé en ce que** ladite substance chimique contient un composé d'argent et est noyée dans une matrice de matière plastique.

2. Appareil frigorifique selon la revendication 1, **caractérisé en ce que** la pièce incorporée fait partie d'un distributeur d'eau potable ou d'une conduite d'alimentation du distributeur d'eau potable.

3. Appareil frigorifique selon la revendication 1, **caractérisé en ce que** la pièce incorporée fait partie d'une machine à glace ou d'une conduite d'alimentation de la machine à glace.

4. Appareil frigorifique selon l'une des revendications 1 à 3, **caractérisé en ce que** la pièce incorporée est emboutie ou extrudée.

5. Appareil frigorifique selon l'une des revendications 1 à 4, **caractérisé en ce que** la substance chimique contient une matière de zéolite dans laquelle des ions métalliques antimicrobiens et/ou antifongiques sont liés de manière interchangeable.
